# EUROPEAN PATENT APPLICATION

(11) **EP 0 744 332 A1**
(43) Date of publication of application: **27.11.1996**
(21) Application number: 95830532.8
(22) Date of filing: 21.12.1995
(51) Int. Cl.: B62H 5/14

(54) **Antitheft device for motor vehicles**

(30) Priority: 25.05.1995 IT BO950259
(71) Applicant: I.P. INNOVATIVE PRODUCTS s.r.l., I-48022 Lugo (Ravenna) (IT)
(72) Inventor: Xavier, Ellis Fernanda, I-48022 Lugo (Ravenna) (IT)
(74) Representative: Pederzini, Paolo

(57) **Abstract**

A mechanical anti-theft device for motor vehicles 2 which includes, essentially, gripper means 5 capable of engaging the cross section of a tyre 3 and a wheel rim 4 of a wheel 1 of the motor vehicle 2 so that it closes on a pivot around the said tyre 3 and said wheel rim 4; a support bar 6 for the gripper means 5; an actuator rod 7, connected to the gripper means 5, which is slides with relation to the bar 6 in such a way that it can be moved, manually, between a first, unlocked, position, when it controls the opening of the gripper means 5 and a second, locked, position, when it controls the closure of the gripper means around the said tyre 3 and wheel rim 4; elastic means 8 are also envisaged, placed between the said bar 6 and the said rod 7, capable of holding the said rod 7 in the unlocked position, and also items 9, associated with the said rod 7 and capable of engaging with the said bar 6 in order to lock the said rod 7 with respect to the same bar in the closed position.

## Description

The present invention relates to a mechanical anti-theft device for motor vehicles, in particular the interference type which is capable of locking the wheel or a part of the tyre and wheel rim, thereby preventing wheel rotation.

In the field of mechanical anti-theft devices for motor vehicles, used for locking one of the two wheels, there already exist manual anti-theft devices composed of an actual chain, with rings, for example, which can be inserted on the inside of the wheel rim and can be closed in by the side of the tyre on the end rings using a known padlock.

Another well-known anti-theft device is a U-shaped rod which, by connecting its open side, engages with a portion of the wheel of the motor vehicle or by one or more of the wheel's spokes and then locked using a cylinder equipped with a couple of slots for the insertion of the free ends of the 'U'-shaped rod. This cylinder has a key locking system for keeping the rod in a position where it interferes with the wheel.

The use of these anti-theft devices is rather difficult, as laborious and uncomfortable manual work is required both for the positioning and the closing of the chain or the rod on the wheel usually on the lower part of the wheel and also for the opening and removal of the anti-theft device.

Another problem with these anti-theft devices is the large amount of space they take up when they are not being used: in fact, it is unusual to find in motor vehicles storage space of sufficient size for the storage of such anti-theft devices.

The aim of this invention, therefore, is to offer an anti-theft device for motor vehicles which can be easily handled, which can be positioned to and removed from one of the two wheels easily and with a limited number of manual operations, all possible in a device which takes up little space.

This aim is achieved by a anti-theft device which can be propped up or pointed with one of its ends against the tyre, composed of two facing, shaped arms, more or less joined together by a pivot or C-shaped jaws, supported by a bar along which the control rod of the same arms is slides. This rod is effectively hinged to the same arms and can be removed manually, thanks to its sliding coupling on the bar, from its first, free position, in which the arms are kept open, to its second, locked position, when it makes the arms form a ring locking pattern around a section of the wheel and the wheel rim, which is maintained using the locking devices linked to the rod and activated, by controls, by the bar.

One of the advantages of this kind of anti-theft device lies in the extreme easiness and quickness of locking the wheel. This consists of propping or pointing the end of the support bar against the external part of the tyre, then of using the rod to bring it into the second position, that of locking, in such a way as to close the arms to form a ring around the tyre and the wheel rim, and finally in activating the locking devices to correctly position the rod in relation to the bar.

The unlocking of the anti-theft device is also quick and simple thanks to the abovementioned flexibility between the rod and the bar which, when the abovementioned locking devices become unlocked, bring the rod into its first, unlocked, position.

A further advantage of this kind of anti-theft device is its largely reduced size. Therefore, it can be easily stored in any motor vehicle storage space, thanks to the possibility of turning the arms in the opposite direction until they are closed like a compass with respect to the previous shape, in order to obtain a dimension which is all but halved with respect to the operating size of the anti-theft device.

The technical characteristics of the invention, according to the aforementioned objects, which are clearly verifiable in the contents of the claims printed below, and their advantages are hereby illustrated by the following description, made with reference to the enclosed diagrams which are purely illustrative, and not restrictive, productions, in which:
- Figure 1 illustrates the anti-theft device, which is the subject of this invention, applied to the back wheel of a motor vehicle, in perspective view;
- Figure 2 illustrates the same anti-theft device, as in Figure 1, in its closed position, as seen from above;
- Figure 3 illustrates a cross section III - III of Figure 2;
- Figure 4 illustrates the same anti-theft device, as in the previous Figures, in a non-operating position, as seen from above with some parts removed in order to highlight other parts,
- Figure 5 illustrates a detail enlargement of one end of the arms which are part of the anti-theft device which is the subject of this invention, from a side view on an enlarged scale;
- Figure 6 illustrates one variation of the anti-theft device, seen schematically from above,
- Figures 7 and 8 illustrate another variation in two different positions, both of which are seen from above on a reduced scale with respect to the previous illustrations;
- Figure 9 illustrates a part of Figure 7 in a prospective view and on an enlarged scale;
- Figure 10 illustrates one part of the anti-theft device in question, in particular the support balls for the tyre, a variation with respect to the previous illustrations. The illustration provides a side view with some parts removed in order to highlight other parts.

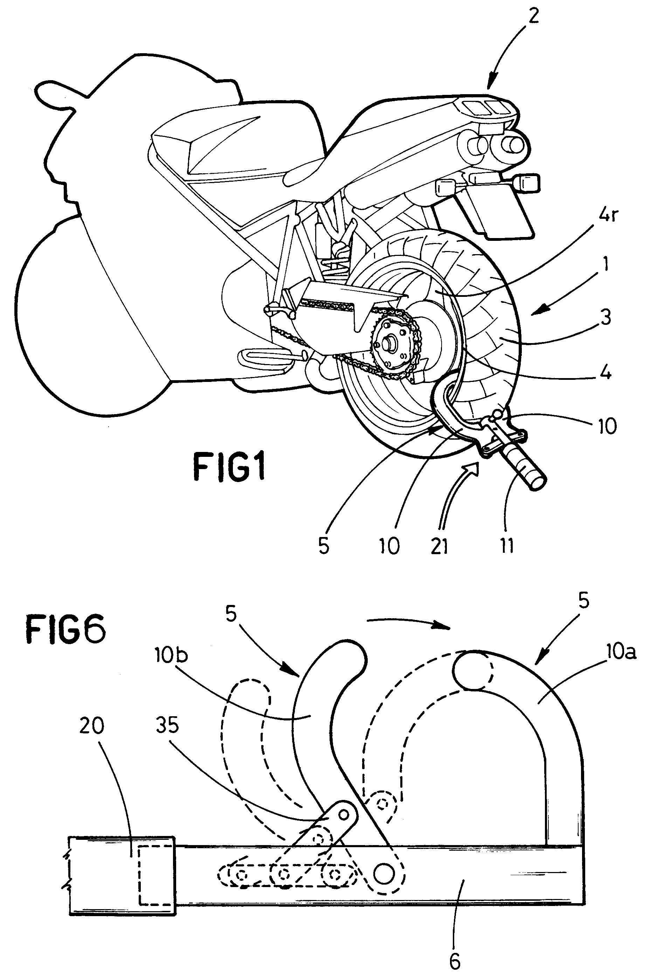

Conforming to the illustrations enclosed, and with particular reference to Figures 1,2 and 3, taken as a whole, 21 refers to the anti-theft device itself, used for locking the wheel 1 of a motor vehicle 2, composed of a tyre 3 and a wheel rim 4, equipped with spokes 4r.

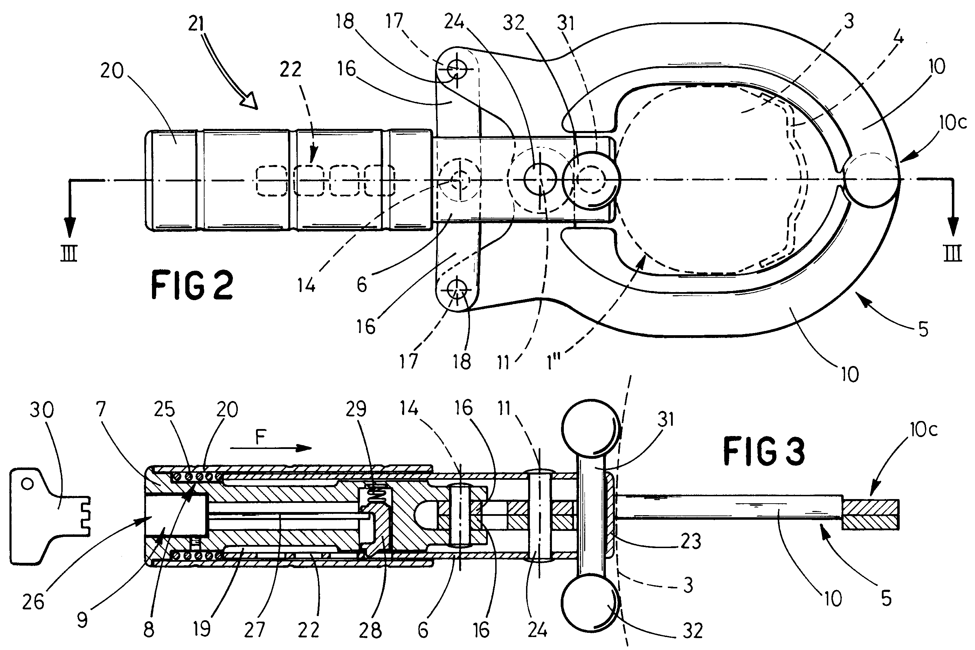

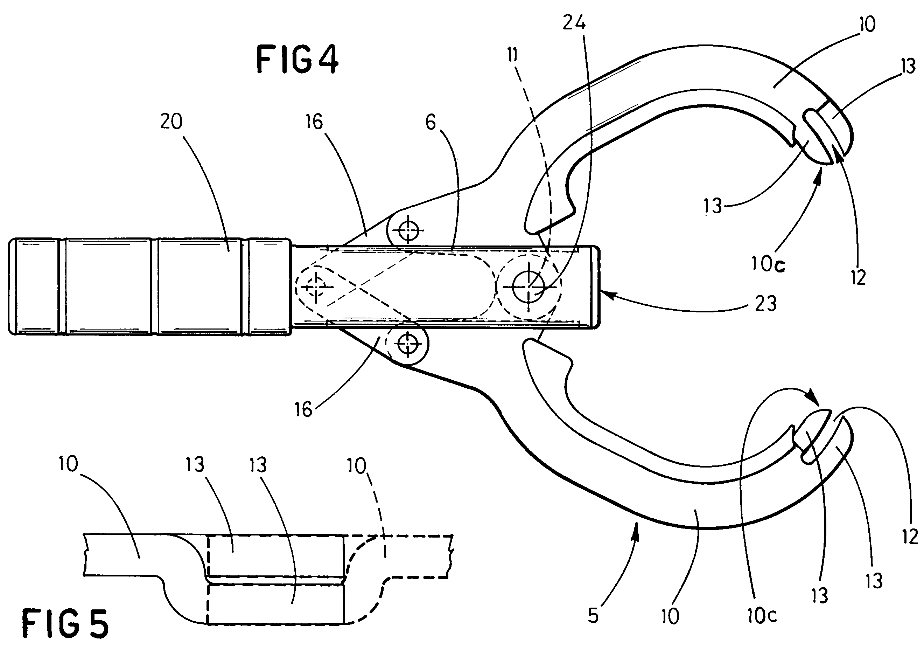

The anti-theft device 21 includes essentially the gripping means, indicated as a whole by the number 5, a support bar 6, cylinder-shaped and including a cavity 19, openings 22, to be seen in Figures 3 and 4, and a supporting head 23 for the tyre 3.

The aforementioned gripping means 5 are made up of a pair of facing, C-shaped arms 10, hinged with a pivot reciprocally at the ends of each one and to the aforementioned bar 6, in 11, by means of a pin 24: the shape of the arms 10 allows them to clamp the wheel radially, or a section of the tyre 3 and relative portion of the wheel rim 4, as can be easily seen in Figure 1.

In the enclosed illustrations, 20 represents a sliding tube assembled on the bar 6. This tube is joined to a rod 7 which itself slides inside the cavity 19 in the same bar 6. Between the tube 20 and the bar 6, there is a return spring 25 forming the elastic means 8.

As can easily be seen in illustrations 2, 3 and 4, two levers 16 are hinged to the rod 7 at point 14, using a first pin 15. The two levers 16 are themselves hinged to their respective arms 10 at point 17 thanks to further pins 18. To ensure the two arms 10 are co-planar, the two levers 16 are placed on irregular planes to compensate for the overlapping of the arms themselves, necessary for their pivot hinging.

The rod 7 is equipped with a key locking system 26 (see Figure 3), forming the locking means 9, comprising of a rod 27 and a bolt 28, suitable for connecting with the aforementioned openings 22 in the bar 6, activated by a related spring 29. The locking system 26 is controlled from the outside using a key 30.

The rod 7 can be slided manually, using the aforementioned tube 20, within the cavity 19 between the first, unlocked, position, when it is held back by the action of the return spring 25, and the second, locked, position, when it is held by the engagement of the aforementioned bolt 28 with one of the aforementioned openings 22, as demonstrated in Figure 3.

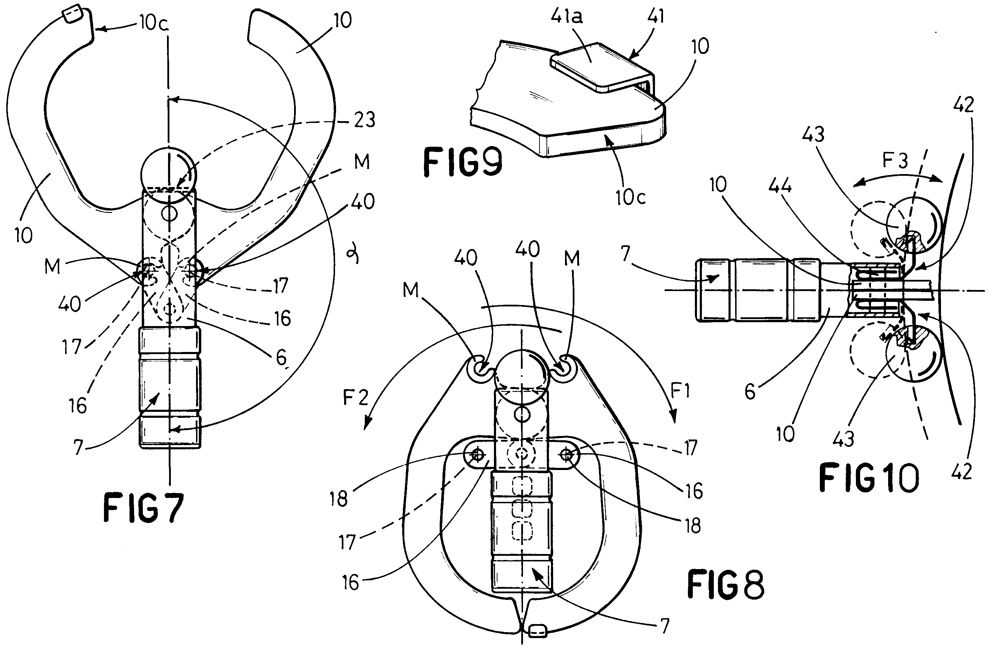

When the anti-theft device is in its operating position, the two co-planar arms 10 come into contact or overlap with their own free ends 10c (see Figure 2). In order to reinforce the pivot closure of the arms 10 at this end 10c, each end 10c can be equipped (see Figures 4 and 5) with an open slot 12, thereby establishing a shaping of the same forked end. One of the two prongs 13 formed by each slot 12 is shaped in such a way that it is developed on a different plane with respect to the other, so as to allow the reciprocal coupling of the two ends 10c of the arms, by means of overlapping of the respective prongs 13, corresponding to the aforementioned locking position of the arms themselves. It is obvious that the shaped prong 13 of one end 10c overlaps with the non-shaped prong 13 of the opposite end.

A further supplementary element of the anti-theft device in question is illustrated in Figures 2 and 3. The bar 6, in fact, is equipped with a second rod 31 which diametrically passes the bar itself, corresponding to its own connecting head 23. This second rod 31 extends on a plane perpendicular to the plane of development of the arms 10 and is equipped with a pair of support elements 32 for the tyre 3 at each respective end which, as can be seen from the illustration, consist of balls 32.

The balls 32, in practise, represent two further points of contact with the tyre 3 (see Figure 3) which allows an easier positioning of the anti-theft device on the tyre itself. As well as this, these balls 32, when the anti-theft device is in its locked position, act as support elements for the anti-theft device itself thanks to their stable position on the tyre 3.

As hereto described, the anti-theft device for motor vehicles in question functions in the following way: starting from a situation in which the anti-theft device 21 is non-operative, as seen in Figure 4, the locking system 26 is open, the tube 20 is pushed back and the spring 25 pushes the rod 7 into an unlocked position. The rod 7 itself then, using the levers 16, keeps the arms 10 of the jaw open.

To then put the anti-theft device 21 into an operating position, the bar 6 with its own head 23 is positioned against the tread of the tyre 3.

Holding the anti-theft device 21 with only one hand, using the metal bar 20 and pushing the same metal bar towards the bar 6, the rod 7 slides into the cavity 19 (see Arrow F in Figure 3), thereby bringing the anti-theft device into its locking position: in such a way, the arms 10 are commanded, by the levers 16, to rotate around the pin 24 and to close themselves around the portion of the tyre 3 and relating wheel rim 4 up to the point of complete locking of the arms 10 represented by the coupling of the two ends 10a.

By means of this action, the bolt can slide into one of the openings 22 of the bar 6, as shown in Figure 3, due to turning the key 30, which locks the rod 7 and the arms 10 in the aforementioned closing position (see Figure 2).

In this condition, the anti-theft device 21 prevents the rotation of the wheel 1 in the illustration, the back wheel, thereby preventing movement of the motor vehicle 2.

To unlock the wheel 1, the locking system 26 must be opened with the key 30, in such a way that the bolt 28 comes away from the opening 22: the rod 7, activated by the spring 25, and sliding in the opposite direction from its previous movement in the cavity 19, brings the arms 10 once again into an unlocked position so that the anti-theft device 21 can be removed from the wheel 1.

Figure 6 illustrates a position of the anti-theft device which is a variation on the positions described up till now. Here the two arms 10a and 10b are in a curved shape and are facing each other.

The arm indicated by 10a is rigidly secured to the free end of the bar 6 and extends laterally on the same bar thus forming a hook shape together with the latter. The second arm 10b, on the other hand, is hinged to the bar 6, in the area closest to the tube 20, and to the rod 7 by means of a corresponding lever 35: in this way the second arm 10b is moved into the aforementioned wheel 1 locking and unlocking positions by, respectively, the approach and the withdrawal of the second arm 10b with respect to the first 10a.

In this specific case, the clamping of the wheel 1 is achieved with the lateral insertion of the first arm 10a in the inside of the wheel 1 on the side of the wheel rim 4, thereby positioning the bar 6 in contact with the side part of the same wheel. Following this, the second arm 10b is engaged, by sliding the tube 20 towards the wheel 1, while the user blocks this movement by holding the arm 10a firmly. The unlocking procedure is carried out in a similar way to the operation just described.

A further structural variation of the anti-theft device in question is illustrated in Figures 7 and 8 where the two arms 10 are equipped with respective open slots 40 on a portion of their own circumference i.e. on the outside part of their arms 10. These slots 40 allow the linking, at point 17, between the arms 10 and the aforementioned levers 16 by means of the aforementioned relative pin 18.

This particular structure of the slots 40 allows the two arms 10 to be moved by the user from an extreme operating position of the two arms (see Figure 7) where the slots 40 are coupled with the pins 18 of the levers 16 so that they can then be put into the closed position, as previously described, and an extreme non-operating position, where the arms 10 are rotated and closed in a resting position (see Figure 8) in order to obtain the shape which takes up least space

More particularly, each of the arms 10 can be rotated by around 180 degrees indicated by in Figure 8, thanks to the possibility of releasing the pins 18 from the relative slots 40 and, according to the directions, indicated by F1 and F2, on the opposite side to one another. In this way, the arms 10 encircle the aforementioned bar 6 and the actuator rod 7, preferably brought into the locking position, inside the space occupied by the same closed arms when in the resting position and with the ends touching, thereby forming a shape of an extremely reduced size for the whole anti-theft device.

In this specific case, to be able to obtain a secure moving of the arms 10 when they are in the operating position, it is preferable to cover the internal contact surface of each slot 40 with the relative pin 18 made of M material with a high friction co-efficient, such as rubber, for example, or another resistant material.

A further structural variant, illustrated in Figures 7, 8 and 9, has one of the arms 10 equipped, one of its own end-parts 10c is fitted with a tab 41 which has a portion 41a folded at a right angle in the direction of the same arm thus forming, together with the facing arm 10 surface, a sliding space for the other arm 10 when they are closed.

To be able to have maximum dimensional flexibility of the anti-theft device with respect to the multiple tyre 3 and wheel rim 4 models, the aforementioned rod 6 can be equipped (see Figure 10) in particular with an opposing pair of flexible sprung elements 42, protruding from the end of the same rod and supporting the elements 43 that rest against the tyre 3 which again in this case are shown, for illustrative purposes only, by relative balls inasmuch as such a shape makes it possible to obtain a secure hold against the tyre 3 .

In the example illustrated, the flexible elements 42 are represented by two single leaf springs of reduced thickness bound by a single pin 44 which diametrically passes the rod 6; these leaf springs 42 are positioned in such a way that they project at right angles from the rod 6 and allow the balls 43 to be moved radially or axially with respect to the aforementioned support head 23.

More precisely, these flexible elements 42, like the second rod 31 discussed previously, protrude from the rod 6 and form along a plane perpendicular to the plane of the arms 10: in this way, this creates a pair of support points, which are adjustable, where the anti-theft device is resting against the tyre 3.

In other words, the elastic movement of the flexible elements 42 ensure that the balls 43 rest against the tyre 3, adjusting themselves by retreating or advancing with respect to the aforementioned support head 23 (see also Arrow F3 in Figure 10), during the closing phase of the arms 10 dependent upon the total space occupied by the sum of the cross sections of the same tyre and the wheel rim 4 of the vehicle or upon the distance between the aforementioned support head 23 of the rod 6 and the free ends of the arms 10 necessary for carrying out the correct and complete locking of the same gripper means.

This particular technique allows an extremely secure and practical locking of the anti-theft device and at the same time allows for a good flexibility of use on many tyre and wheel models.

Thanks to its extremely compact structure, the anti-theft device 21 takes up less space and can be easily carried in any motor vehicle storage space in a space under the saddle, for example or inside any holder provided by motor vehicle accessories back trunk, tank bag, etc..

As can be deduced from the previous description, it is clear that the anti-theft device can be positioned and closed, with a few simple manual operations, radially around a portion of the wheel of a motor vehicle and also removed from it, using the locking bolt.

The safety of the locking is even greater thanks to the coupling of the ends of the arms which prevents any possible forcing of them by means of any pushing or pulling on the arms in a direction which is perpendicular to them.

A further element which allows an easier and more comfortable application of the anti-theft device is the rod with balls, which increases the surface area of support for the anti-theft device on the tyre, in addition to the head of the bar during assembly and at the same time becomes a support for the anti-theft device itself when this latter is applied to the tyre.

## Claims

1. An anti-theft device for motor vehicles which can, in particular, lock the wheel 1 of the said motor vehicle 2, composed of a tyre 3 and a wheel rim 4, equipped with spokes 4r, characterised by including:
- gripper means 5 which can engage the cross section of the said tyre 3 and the said wheel rim 4 of the said wheel 1, thereby closing itself around the said tyre 3 and the said wheel rim 4;
- a support bar 6 containing said gripper means 5, structured so that you can put their own ends or heads 23, against the surface of the said tyre 3;
- at least one actuator rod 7 connected to the said gripper means 5, which slides with respect to the said bar 6 so that they can be manually moved between a first, unlocked, position, where it controls the opening of the said means 5, and a second, locked, position, where it controls the locking of the said means 5 around the said tyre 3 and the said wheel rim 4;
- elastic means 8, placed between the said bar 6 and the said actuator rod 7, which can hold the said rod 7 in the said former unlocked position.
- items 9, 28, 29, linked to the said actuator rod 7, capable of holding the said bar 6 in such a way that the said rod 7 is blocked with respect to the said bar 6 in the said first, locked, position.

2. An anti-theft device, as described in Claim 1, characterised by the fact that the said gripper means 5 are formed by two, more or less C-shaped arms, facing one another which are hinged together by a pivot at one end, at point 11, and at the said support bar 6; in this said support bar 6, the said, sliding actuator rod 7 is capable of controlling the opening and closing of the said arms 10.

3. An anti-theft device, as described in Claim 2, characterised by the fact that each of the said arms 10 has its respective free end 10a equipped with an open slot 12 giving the same end a forked shape, where one of the two prongs 13 of each said fork is shaped in such a way that it protrudes on a different plane with respect to the other and therefore allows the reciprocal coupling of the two ends 10a of the said arms 10, by means of overlapping of the respective said prongs 13, in correspondence with the said closing position of these two arms.

4. An anti-theft device, as described in Claim 2, characterised by the fact, at the said rod 7, two levers 16 are hinged at point 14, by means of a relative first pin 15; these levers 16 are themselves hinged to the said arms 10 at point 17 using respective second pins 18.

5. An anti-theft device, as described in Claim 1, characterised by the fact that the said rod 7 slides into a cavity 19 of the said bar 6 and to which a tube 20 is fixed solidly; between the said rod 7 and the said tube 20 the said elastic means 8 are placed.

6. An anti-theft device, as described in Claim 1, characterised by the fact that the said bar 6 is equipped, corresponding to its own free end, with a second rod 31 which diametrically passes through the same bar; this said second rod 31 is arranged on a plane which is perpendicular to the plane of the said gripping means 5, and equipped with contact elements 32, at its own respective ends, which form points which rest against the said tyre 3.

7. An anti-theft device, as described in Claim 6, characterised by the fact the said contact elements 32 have a spherical shape.

8. An anti-theft device, as described in Claim 1, characterised by the fact that the said gripper means 5 are composed of two arms 10a, 10b in a curved shape and facing each other; the first of these said arms 10a is rigidly fixed to the free end of the said bar 6 and protrudes laterally to the same bar thus forming with it a hook shape, the second of these arms 10b being hinged to the said bar 6 and to the said actuator rod 7 by means of a corresponding lever 35, in such a way that it allows the said locked and unlocked positions of the said wheel 1 to be achieved by moving the first towards or away from the said second arm 10b with respect to the first 10a.

9. An anti-theft device, as described in Claim 2, characterised by the fact that the two said arms 10 contain respective open slots 40 which are shaped in such a way that they allow the said arms 10 to move between an extreme operating position of the arms, when the said slots 40 are engaged, at point 17, with corresponding control levers 16 of the same arms 10 linked to the said actuator rod 7, and an extreme non-operating position, when the said arms 10 have both been turned by at least 180 degrees , in opposing directions indicated by F1, F2, in such a way that they encircle the said bar 6 and the said actuator rod 7 inside the space defined by the same locked, resting, arms.

10. An anti-theft device, as described in Claim 9, characterised by the fact that each said arm 10 contains said slots 40 with their own surface of contact with the respective said lever 16 covered with material M with a high friction co-efficient.

11. An anti-theft device, as described in Claim 2, characterised by the fact that one of the said arms 10 is equipped, corresponding to its own end 10c, with a tab 41 which has a portion 41a folded at a right angle in the direction of the said arm 10 in such a way that it forms, together with the arm itself, a sliding space for the other said arm 10 corresponding with the closing of the said arms 10.

12. An anti-theft device, as described in Claim 1, characterised by the fact that the said rod 6 is equipped, corresponding to its own free end, with an opposing pair of flexible sprung elements 42; these flexible elements 42 protrude on a plane perpendicular with respect to the plane of the said gripper means 5, and a contact element 43 is joined to each of these flexible elements at the end of each, thus forming a contact point for the said tyre 3 that can be adjusted for the said bar 6 depending upon the overall size of the cross sections of the same tyre and the wheel rim 4 i.e. the distance between the aforementioned contact head 23 of the bar 6 and the free ends of the said gripper means 5 necessary for the correct and complete closing of the same gripper means 5.

13. An anti-theft device, as described in Claim 12, characterised by the fact that the said support elements 43 have a spherical shape.

14. An anti-theft device, as described in Claim 12, characterised by the fact the said flexible elements 42 protrude, on the outside of the said bar 6, so as to allow the said contact elements 43 to be moved radially or axially with respect to the said contact head 23.
